(19) Europäisches Patentamt

European Patent Office

Office européen des brevets

(11) **EP 2 516 989 B1**

(12) **EUROPEAN PATENT SPECIFICATION**

(45) Date of publication and mention of the grant of the patent:
**26.08.2020 Bulletin 2020/35**

(21) Application number: **11855267.8**

(22) Date of filing: **11.01.2011**

(51) Int Cl.:
*G01N 30/04* (2006.01)     *G01N 21/00* (2006.01)
*B01L 7/00* (2006.01)     *G01N 35/04* (2006.01)

(86) International application number:
**PCT/US2011/020735**

(87) International publication number:
**WO 2012/096649 (19.07.2012 Gazette 2012/29)**

(54) **APPARATUS FOR REDUCING VARIATION IN SAMPLE TEMPERATURES IN A LIQUID CHROMATOGRAPHY SYSTEM**

VORRICHTUNG FÜR REDUZIERTE PROBENTEMPERATURVARIATIONEN IN EINEM FLÜSSIGCHROMATOGRAFIESYSTEM

APPAREIL POUR RÉDUIRE LA VARIATION DES TEMPÉRATURES D'ÉCHANTILLONS DANS UN SYSTÈME DE CHROMATOGRAPHIE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.10.2012 Bulletin 2012/44**

(73) Proprietor: **Waters Technologies Corporation Milford, MA 01757 (US)**

(72) Inventors:
• **SHREVE, Joshua, A.**
**Franklin**
**MA 02038 (US)**
• **USOWICZ, James, E.**
**Webster**
**MA 01570 (US)**
• **SOARES, Miguel**
**Norton**
**MA 02766 (US)**

(74) Representative: **Harding, Andrew Philip**
**Forresters IP LLP**
**Skygarden**
**Erika-Mann-Strasse 11**
**80636 München (DE)**

(56) References cited:
**WO-A2-00/67872         US-A- 3 841 059**
**US-A- 4 335 620         US-A1- 2002 122 745**
**US-A1- 2003 224 395     US-A1- 2004 009 099**
**US-A1- 2008 145 282**

EP 2 516 989 B1

**Description**

FIELD OF THE INVENTION

The invention relates generally to liquid chromatography systems. More particularly, the invention relates to an apparatus that reduces the temperature variation among samples in a sample compartment of a liquid chromatography system.

BACKGROUND

A liquid chromatography system typically includes a sample compartment that provides a controlled environment for samples to be analyzed. The temperature within the sample compartment is ideally maintained at a constant value during measurements. For example, the sample compartment may be cooled to a temperature below the ambient temperature using thermoelectric cooling. One or more fans are used to generate an airflow that is directed across the cooling system and through the sample compartment. Structures within the sample compartment can interrupt or restrict the cooling airflow, thereby causing the air temperature within the compartment to vary with location. In some instances, the temperature variations within the compartment can cause unacceptable variations in the sample temperatures. A sample kept at the wrong temperature can degrade and influence the results of liquid chromatography analysis; therefore it is desirable to maintain each sample within a limited temperature range so that variation in sample temperatures does not significantly affect accuracy, repeatability, or sample integrity.

US4335620 discloses the pre-characterising features of claim 1.

SUMMARY OF THE INVENTION

In one aspect, the invention features an apparatus for reducing a temperature variation of a liquid chromatography sample, comprising: a sample tray (18) to hold a plurality of samples; a tray drive (34) configured to move the sample tray (18) along a path (58,66); a sample needle (30) to extract one of the samples from the sample tray (18); a needle drive (26) to translate the sample needle (30); and a control module (38) in electrical communication with the tray drive (34) and the needle drive (26), characterised in that the apparatus further comprises a sample compartment (10) having an enclosed volume that includes at least the sample tray (18) and the sample needle (30), the enclosed volume being thermally controllable; a thermo-electric cooler (42) in communication with the enclosed volume of the sample compartment (10); and the control module (38) is configured to control a position of the sample tray (18) and a position of the sample needle (30) during a sample load operation, and the control module (38) is further configured to control a position and rate of motion of the sample tray (18) along the path (58, 66) during a temperature averaging period defined by the time available between the loadings of samples for injection into the liquid chromatography system.

The present invention further provides an apparatus as claimed.

BRIEF DESCRIPTION OF THE DRAWINGS

The above and further advantages of this invention may be better understood by referring to the following description in conjunction with the accompanying drawings, in which like numerals indicate like structural elements and features in the various figures. For clarity, not every element may be labeled in every figure. The drawings are not necessarily to scale, emphasis instead being placed upon illustrating the principles of the invention.

FIG. 1 is a block diagram illustrating a sample compartment for a liquid chromatography system.

FIG. 2 is a block diagram showing a control system for coordinating a rotary drive and a needle drive for reducing the variation in sample temperatures for a liquid chromatography system according to an embodiment of the invention.

FIG. 3 is an illustration of an embodiment of an apparatus for reducing the variation in sample temperatures in a liquid chromatography system according to the invention.

FIG. 4 is an illustration of another embodiment of an apparatus for reducing the variation in sample temperatures in a liquid chromatography system according to the invention.

DETAILED DESCRIPTION

In brief overview, the invention relates to an apparatus for reducing the variation of sample temperatures in a liquid chromatography system. A tray drive is used to move a sample tray inside a sample compartment of the liquid chromatography system. A control module coordinates the movement of the sample tray by the tray drive and the movement of a sample needle by a needle drive so that any sample in the sample tray can be injected into the mobile phase of the system during a sample load operation. The same tray drive is used to move the sample tray along a path during a temperature averaging period between injection times or at other times when sample loading does not occur. Differences in sample temperatures due to variations in the air temperature within the sample compartment are reduced, leading to more accurate and repeatable chromatographic measurement results.

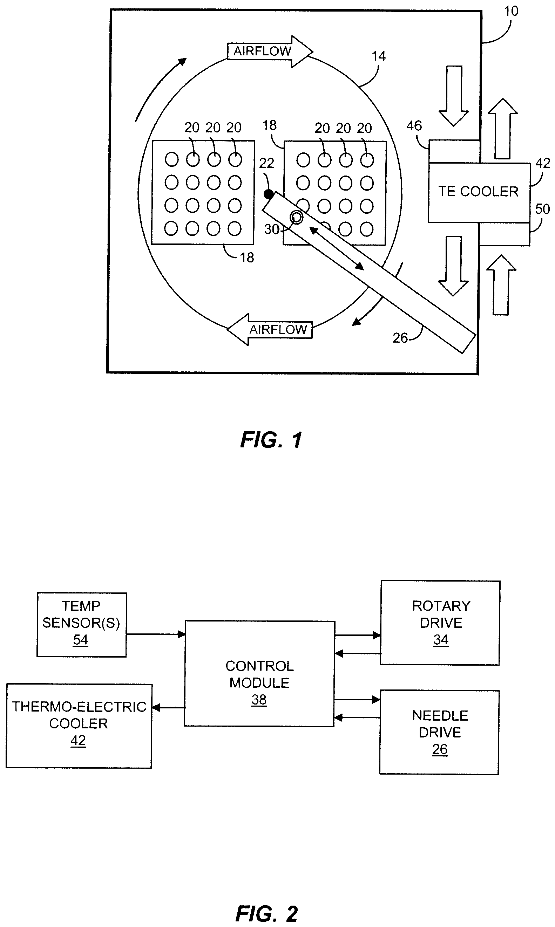

FIG. 1 illustrates a portion of a liquid chromatography system according to an embodiment of the invention. The system includes a sample compartment 10. As used herein, a sample compartment means a substantially enclosed volume where a number of samples for chromatographic analysis are maintained in a thermally controlled environment. The sample compartment 10 includes a mounting platform 14 that holds two removable sample trays 18. In other embodiments a single sample tray or more than two trays are used. Each sample tray 18 has multiple sample vials or wells to hold a sample in a fixed position 20 with respect to the other samples in the sample tray 18. The sample tray 18 is secured to a rotary drive (not shown) so that rotation about a vertical axis 22 (i.e., normal to the plane of the figure) at a midpoint between the sample trays 18 is enabled. The rotary drive is used to change the angular position of the sample tray 18 and a needle drive 26 is used to change the position of a sample needle 30. Combined control of the needle drive 26 and rotary drive allows for the sample needle 30 to move to the location 20 of any sample and to extract the sample for injection into the mobile phase of the chromatography system.

The rotary drive 34 and the needle drive 26 are managed by a control module 38 as shown in FIG. 2. The control module 26 also controls a thermo-electric cooler 42 in response to the temperature sensed by one or more sensors 54 inside the sample compartment 10. The control module 38 coordinates operation of the rotary drive 34 and needle drive 26 so that the sample needle 30 moves to sample locations to extract samples for analysis in an automated manner.

Referring again to FIG. 1, the thermo-electric cooler 42 is mounted through a wall of the sample compartment 10. The thermoelectric cooler 42 can be a Peltier device or similar device adapted to cool the environment inside the compartment 10. One or more fans 46 mounted near the cooling surfaces of the cooler 42 are used to circulate cooled air throughout the sample compartment 10. An external fan 50 directs ambient air across external fins of the thermo-electric cooler 42 to remove excess heat.

Structures within the sample compartment 10 can interrupt or restrict the airflow thereby causing the internal air temperature to vary with location. Consequently, the sensed temperature may not accurately represent the temperature at each sample location 20.

The temperature of a sample can influence the results of the liquid chromatography analysis therefore it is desirable to maintain the temperature of each sample within a limited range so that repeatability of chromatographic results is improved. A maximum temperature difference $\Delta T$ between $N$ samples can be specified for the system where $\Delta T$ is given by

$$\Delta T = max(T_s) - min(T_s)$$

where each sample has a temperature $T_s$ (s = 1 to $N$).

By way of a particular example, the maximum temperature difference $\Delta T$ can be specified as 1°C.

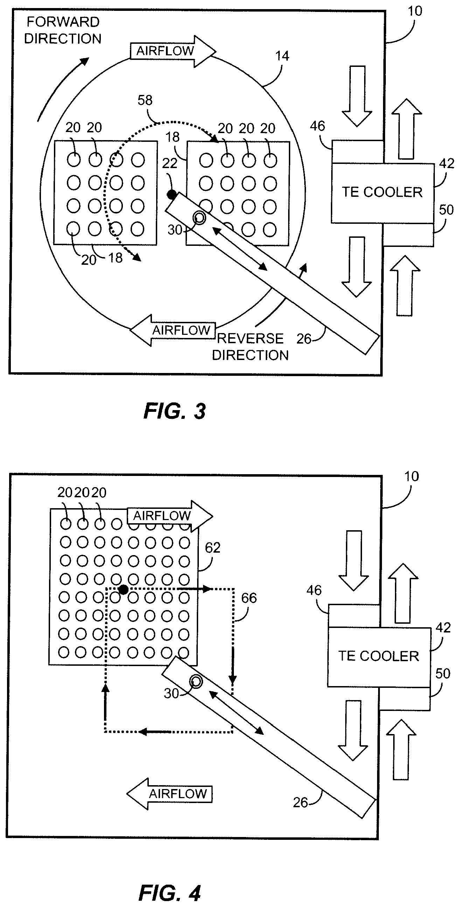

The apparatus of the invention enables a reduction in the maximum temperature difference $\Delta T$ to be achieved. According to a preferred embodiment shown in FIG. 3, the mounting platform 14 is rotated about the vertical axis 22 so that the two sample trays 18 move along respective paths (only one path (dashed line) 58 shown for clarity) during a temperature averaging period when samples are not being extracted by the sample needle 30. The samples typically experience a range of air temperatures along the path 58 therefore the adverse affect of local temperature variations is diminished and the temperature of each sample approaches the average air temperature along its path of motion. In the illustrated embodiment, the mounting platform 14 is rotated over a portion of a circular path in a bidirectional manner. More specifically, the mounting platform 14 is rotated in a forward direction through 180° and then rotated in a reverse (opposite) direction through 180°. In other embodiments the rotation is unidirectional and/or the range of rotation is different. In one such embodiment the paths extend through 360°.

In one embodiment, the rate of rotation is set according to known temperature characteristics of the sample compartment 10 and the time available between the loadings of samples for injection.

The combination of rotational and translational motions can result in increased complexity during sample loading. Specifically, needle positioning errors based on angular error in rotational motion is compounded with increasing distance from the axis of rotation 22 whereas pure translational motion general results in placement errors ranges that do not vary with position. Thus the rotary drive 34 preferably includes a rotary encoder to ensure accurate angular positioning of the sample trays 18. By way of examples, the rotary encoder can be a magnetic rotary encoder or an optical rotary encoder as is known in the art.

Advantageously, the illustrated embodiment eliminates the added cost and size requirements that otherwise result from inclusion of a separate motion module to move the sample trays 18 to achieve sample temperature averaging. Rotation of the sample trays 18 does not disturb normal operation of the chromatography system because it occurs during temperature averaging periods that do not conflict with times when samples are extracted and loaded into the mobile phase. In one embodiment, after a loading operation is completed, the mounting platform 14 is returned to the path location immediately prior to the time the loading commenced. Alternatively, the mounting platform 14 can be moved to an initial path position after completion of a load operation.

In the embodiments described above, the path of an individual sample varies according to the distance of the sample from the axis of rotation 22. In some environments, it may be desirable to move all samples through a similar path length. FIG. 4 shows a sample compartment 10 with a single sample tray 62 having a high sample density. Each sample is moved along a rectangular path that is offset from the path 66 shown for the motion of the center of the sample tray 18. Although shown as a closed rectangular path, in other embodiments the path 66 can be of another form such as a linear path, a non-linear path, or a combination of linear and/or non-linear path segments. The path 66 can be predefined according to the space available inside the sample compartment 10 for moving the sample tray 62. The preferred path and the rate of motion along the path may be based on a known spatial temperature distribution within the sample compartment 10.

While the invention has been shown and described with reference to specific embodiments, it should be understood by those skilled in the art that various changes in form and detail may be made therein without departing from the scope of the invention as recited in the accompanying claims.

**Claims**

1. An apparatus for reducing a temperature variation of a liquid chromatography sample, comprising:

   a sample tray (18) to hold a plurality of samples;
   a tray drive (34) configured to move the sample tray (18) along a path (58, 66);
   a sample needle (30) to extract one of the samples from the sample tray (18);
   a needle drive (26) to translate the sample needle (30);
   and
   a control module (38) in electrical communication with the tray drive (34) and the needle drive (26),

   **characterised in that** the apparatus further comprises
   a sample compartment (10) having an enclosed volume that includes at least the sample tray (18) and the sample needle (30), the enclosed volume being thermally controllable;
   a thermo-electric cooler (42) in communication with the enclosed volume of the sample compartment (10); and
   the control module (38) is configured to control a position of the sample tray (18) and a position of the sample needle (30) during a sample load operation, and the control module (38) is further configured to control a position and rate of motion of the sample tray (18) along the path (58, 66) during a temperature averaging period defined by the time available between the loadings of samples for injection into the liquid chromatography system.

2. The apparatus of claim 1 wherein the movement of the sample tray (18) along the path (58, 66) during the temperature averaging mode is unidirectional.

3. The apparatus of claim 1 wherein the movement of the sample tray (18) along the path (58, 66) during the temperature averaging mode is bidirectional.

4. The apparatus of claim 1 wherein the control module controls (38) the movement of the sample tray (18) along at least a portion of a circular path (58) within the sample compartment (10) during the temperature averaging period.

5. The apparatus of claim 1 wherein the tray drive (34) is a rotary drive configured to rotate the sample tray (18) along a path (58) inside a sample compartment (10) of a liquid chromatography system; and
   the control module (38) is in electrical communication with the rotary drive and the needle drive, the control module (38) controlling a translation of the sample needle (30) and rotation of the sample tray (18) during a sample load operation mode, the control module controlling a rotation of the sample tray (18) during said temperature averaging period.

6. The apparatus of claim 5 wherein the rotation of the sample tray (18) is bidirectional.

7. The apparatus of claim 5 wherein the rotation of the sample tray (18) is unidirectional.

8. The apparatus of claim 5 wherein the path (58) is a closed loop path.

9. The apparatus of claim 5 wherein the path is at least a portion of a circular path.

10. The apparatus of claim 5 wherein the apparatus comprises a pair of sample trays.

**Patentansprüche**

1. Vorrichtung zur Reduzierung einer Temperaturvariation einer Flüssigchromatografieprobe, umfassend:

   eine Probenschale (18) zum Aufnehmen einer Vielzahl von Proben;
   einen Schalenantrieb (34), der dafür konfiguriert ist, die Probenschale (18) entlang einer Bahn (58, 66) zu bewegen;
   eine Probennadel (30) zum Extrahieren einer der Proben aus der Probenschale (18);
   einen Nadelantrieb (26) zum Translatieren der Probennadel (30);
   und

ein Steuermodul (38) in elektrischer Kommunikation mit dem Schalenantrieb (34) und dem Nadelantrieb (26),

**dadurch gekennzeichnet, dass** die Vorrichtung ferner umfasst

ein Probenkompartiment (10) mit einem eingeschlossenen Volumen, das mindestens die Probenschale (18) und die Probennadel (30) beinhaltet, wobei das eingeschlossene Volumen thermisch steuerbar ist;

einen thermoelektrischen Kühler (42) in Kommunikation mit dem eingeschlossenen Volumen des Probenkompartiments (10); und

das Steuermodul (38) dafür konfiguriert ist, eine Position der Probenschale (18) und eine Position der Probennadel (30) während eines Probenladevorgangs zu steuern, und das Steuermodul (38) ferner dafür konfiguriert ist, eine Position und Bewegungsrate der Probenschale (18) entlang der Bahn (58, 66) während eines Temperaturmittelungszeitraums zu steuern, der von der verfügbaren Zeit zwischen den Ladungen von Proben zur Injektion in das Flüssigchromatografiesystem definiert ist.

2. Vorrichtung nach Anspruch 1, wobei die Bewegung der Probenschale (18) entlang der Bahn (58, 66) während des Temperaturmittelungsmodus unidirektional ist.

3. Vorrichtung nach Anspruch 1, wobei die Bewegung der Probenschale (18) entlang der Bahn (58, 66) während des Temperaturmittelungsmodus bidirektional ist.

4. Vorrichtung nach Anspruch 1, wobei das Steuermodul (38) die Bewegung der Probenschale (18) entlang mindestens eines Abschnitts einer kreisförmigen Bahn (58) innerhalb des Probenkompartiments (10) während des Temperaturmittelungszeitraums steuert.

5. Vorrichtung nach Anspruch 1, wobei der Schalenantrieb (34) ein Drehantrieb ist, der dafür konfiguriert ist, die Probenschale (18) entlang einer Bahn (58) innen in einem Probenkompartiment (10) eines Flüssigchromatografiesystems zu drehen; und

das Steuermodul (38) in elektrischer Kommunikation mit dem Drehantrieb und dem Nadelantrieb ist, wobei das Steuermodul (38) eine Translation der Probennadel (30) und Drehung der Probenschale (18) während eines Probenladevorgangsmodus steuert, wobei das Steuermodul eine Drehung der Probenschale (18) während des Temperaturmittelungszeitraums steuert.

6. Vorrichtung nach Anspruch 5, wobei die Drehung der Probenschale (18) bidirektional ist.

7. Vorrichtung nach Anspruch 5, wobei die Drehung der Probenschale (18) unidirektional ist.

8. Vorrichtung nach Anspruch 5, wobei die Bahn (58) eine geschlossene Bewegungsbahn ist.

9. Vorrichtung nach Anspruch 5, wobei die Bahn mindestens ein Abschnitt einer kreisförmigen Bahn ist.

10. Vorrichtung nach Anspruch 5, wobei die Vorrichtung ein Paar Probenschalen umfasst.

**Revendications**

1. Appareil pour réduire une variation de température d'un échantillon de chromatographie liquide, comprenant :

un porte-échantillon (18) pour supporter une pluralité d'échantillons ;
un moyen d'entraînement de porte-échantillon (34), configuré pour déplacer le porte-échantillon (18) suivant une trajectoire (58, 66) ;
une aiguille de prélèvement (30) pour extraire un des échantillons du porte-échantillon (18) ;
un moyen d'entraînement d'aiguille (26) pour déplacer par translation l'aiguille de prélèvement (30) ; et
un module de contrôle (38) en communication électrique avec le moyen d'entraînement de porte-échantillon (34) et le moyen d'entraînement d'aiguille (26),
l'appareil étant **caractérisé en ce qu'**il comprend en outre :

un compartiment à échantillon (10) ayant un volume fermé qui inclut au moins le porte-échantillon (18) et l'aiguille de prélèvement (30), le volume fermé pouvant être contrôlé thermiquement ;
un refroidisseur thermoélectrique (42) en communication avec le volume fermé du compartiment à échantillon (10) ; et
le module de contrôle (38) étant configuré pour contrôler une position du porte-échantillon (18) et une position de l'aiguille de prélèvement (30) pendant une opération de chargement d'échantillon, et le module de contrôle (38) étant en outre configuré pour contrôler une position et une vitesse de déplacement du porte-échantillon (18) suivant la trajectoire (58, 66) pendant une période de moyennage de température définie par le temps disponible entre les chargements d'échantillons pour une injection dans le système de chromatographie liquide.

**2.** Appareil selon la revendication 1, dans lequel le déplacement du porte-échantillon (18) suivant la trajectoire (58, 66) pendant le mode de moyennage de température est unidirectionnel.

**3.** Appareil selon la revendication 1, dans lequel le déplacement du porte-échantillon (18) suivant la trajectoire (58, 66) pendant le mode de moyennage de température est bidirectionnel.

**4.** Appareil selon la revendication 1, dans lequel le module de contrôle (38) contrôle le déplacement du porte-échantillon (18) suivant au moins une partie d'une trajectoire circulaire (58) dans le compartiment à échantillon (10) pendant la période de moyennage de température.

**5.** Appareil selon la revendication 1, dans lequel le moyen d'entraînement de porte-échantillon (34) est un moyen d'entraînement rotatif configuré pour faire tourner le porte-échantillon (18) suivant une trajectoire (58) à l'intérieur d'un compartiment à échantillon (10) d'un système de chromatographie liquide ; et

le module de contrôle (38) est en communication électrique avec le moyen d'entraînement rotatif et le moyen d'entraînement d'aiguille, le module de contrôle (38) contrôlant une translation de l'aiguille de prélèvement (30) et une rotation du porte-échantillon (18) pendant un mode d'opération de chargement d'échantillon, le module de contrôle contrôlant une rotation du porte-échantillon (18) pendant ladite période de moyennage de température.

**6.** Appareil selon la revendication 5, dans lequel la rotation du porte-échantillon (18) est bidirectionnelle.

**7.** Appareil selon la revendication 5, dans lequel la rotation du porte-échantillon (18) est unidirectionnelle.

**8.** Appareil selon la revendication 5, dans lequel la trajectoire (58) est une trajectoire en boucle fermée.

**9.** Appareil selon la revendication 5, dans lequel la trajectoire est au moins une partie d'une trajectoire circulaire.

**10.** Appareil selon la revendication 5, l'appareil comprenant une paire de porte-échantillons.

**FIG. 1**

**FIG. 2**

FORWARD
DIRECTION

AIRFLOW

14

58

20 20    18    20 20 20

22

30

18

20   18

46

TE COOLER

42

50

AIRFLOW    REVERSE    26
DIRECTION

**FIG. 3**

10

20 20 20

AIRFLOW

62

66

46

TE COOLER

42

50

30

AIRFLOW    26

**FIG. 4**

**EP 2 516 989 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4335620 A